Europäisches Patentamt

European Patent Office

Office européen des brevets

(11) Veröffentlichungsnummer: **0 373 526**
**A2**

## (12) EUROPÄISCHE PATENTANMELDUNG

(21) Anmeldenummer: **89122652.4**

(22) Anmeldetag: **08.12.89**

(51) Int. Cl.5: **B60P 7/08, B25B 25/00**

(30) Priorität: **16.12.88 DE 3842402**

(43) Veröffentlichungstag der Anmeldung:
**20.06.90 Patentblatt 90/25**

(84) Benannte Vertragsstaaten:
**AT CH DE FR GB IT LI SE**

(71) Anmelder: **EISEN- UND DRAHTWERK ERLAU
AKTIENGESELLSCHAFT
Erlau 16
D-7080 Aalen(DE)**

(72) Erfinder: **Herdeg, Karl
Stuttgarter Strasse 120
D-7080 Aalen(DE)**

(74) Vertreter: **Jackisch-Kohl, Anna-Katharina et al
Patentanwälte Jackisch-Kohl & Kohl
Stuttgarter Strasse 115
D-7000 Stuttgart 30(DE)**

(54) **Spanneinrichtung mit einem Spannwerkzeug.**

(57) Solche Spanneinrichtungen dienen zum Spannen von Zäunen und weisen zwei bügelförmige Träger auf, die das Spannwerkzeug und eine Umlenkrolle bzw. zwei auf gleicher Achse sitzende Umlenkrollen für ein Zugteil haben. Diese Träger sind relativ breit, da sie das Spannwerkzeug und die Umlenkrollen aufweisen.

Um die Spanneinrichtung zum Verzurren von Gütern einsetzen zu können, muß sie konstruktiv einfach ausgebildet sein und darf in montierter Lage nur wenig auftragen. Hierzu sitzen die Rollen (3, 4, 16 bis 21) für das Zugteil (5) auf verschiedenen Achsen, und das Spannwerkzeug (1) ist zwischen den Trägern (6, 7) im Zugteilabschnitt angeordnet. Dadurch läßt sich die Spanneinrichtung optimal innerhalb der Verzurrung anordnen, ohne daß die Träger (6, 7) und/oder das Spannwerkzeug (1) überstehen. Die Spanneinrichtung eignet sich daher besonders für Verzurrgut, das mit einer geringen Zahl von Verzurmitteln bzw. auf der Lagefläche eines Kraftfahrzeuges gesichert werden kann.

FIG. 1

## Spanneinrichtung mit einem Spannwerkzeug

Die Erfindung betrifft eine Spanneinrichtung nach dem Oberbegriff des Anspruches 1.

Eine bekannte Spanneinrichtung dieser Art (US-PS 1 091 964) dient zum Spannen von Zäunen und hat zwei bügelförmige Träger, von denen der eine Träger das Spannwerkzeug und eine Umlenkrolle und der andere Träger zwei auf gleicher Achse sitzende Umlenkrollen für das Zugteil aufweist. Der eine Träger wird zum Spannen des Zauns beispielsweise an einem Baumstamm befestigt, während am anderen Träger der zu spannende Zaun mit einer Kette eingehängt ist. Mit dem Spannwerkzeug wird das Zugteil auf eine Welle des anderen Trägers aufgewickelt, wodurch der andere Träger mit dem angehängten Zaun herangezogen und so der Zaun gespannt wird.

Die Träger sind relativ breit, da sie das Spannwerkzeug und die Umlenkrollen aufweisen und die Umlenkrollen achsgleich nebeneinander bzw. neben dem Spannwerkzeug liegen. Würde eine solche Spanneinrichtung zum Verzurren eingesetzt, würden die Träger bei verzurrtem Gurt verhältnismäßig weit vorstehen und dadurch eine Gefahrenquelle bilden.

Der Erfindung liegt die Aufgabe zugrunde, eine Spanneinrichtung dieser Art so auszubilden, daß sie konstruktiv einfach ausgebildet ist und in montierter Lage nur wenig aufträgt, so daß sie zum Verzurren von Gütern eingesetzt werden kann.

Diese Aufgabe wird bei einer Spanneinrichtung der gattungsbildenden Art erfindungsgemäß mit den kennzeichnenden Merkmalen des Anspruches 1 gelöst.

Bei der erfindungsgemäßen Spanneinrichtung sitzen die Rollen für das Zugteil auf verschiedenen Achsen, so daß die Träger mit den Rollen nur geringe Höhe haben. Da außerdem das Spannwerkzeug zwischen den Trägern im Zugteilabschnitt angeordnet ist, hat die gesamte Spanneinrichtung nur sehr geringe Höhe. Die Spanneinrichtung läßt sich darum optimal innerhalb der Verzurrung anordnen, ohne daß die Träger und/oder das Spannwerkzeug zu weit überstehen und dadurch zu einer Gefahrenquelle werden. Das Zugteil kann je nach gewünschter Vorspannkraft wahlweise über die Rollen geführt werden, so daß auf einfache Weise die jeweilige Festigkeit des verwendeten Verzurrmittels optimal ausgenutzt werden kann. Dadurch kann das Verzurrgut mit einer geringen Zahl von Verzurrmitteln beispielsweise auf der Ladefläche eines Kraftfahrzeuges oder dgl. gesichert werden. Außerdem können herkömmliche Spannwerkzeuge verwendet werden, so daß diese nicht vergrößert oder verlängert werden müssen, was zu einer erheblichen Verteuerung und Erschwernis bei der Handhabung und Montage führen würde.

Weitere Vorteile der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:

Fig. 1 Eine erfindungsgemäße Spannungeinrichtung für ein Verzurrmittel in Seitenansicht,

Fig. 2 bis 4 eine weitere Ausführungsform einer erfindungsgemäßen Spanneinrichtung in einer Darstellung entsprechend Fig. 1,

Fig. 5 in vergrößerter Darstellung einen Träger einer der Spanneinrichtungen nach den Fig. 1 bis 4,

Fig. 6 einen Schnitt längs der Linie VI-VI in Fig. 5,

Fig. 7 ein Anschlußstück zum Verbinden einer Verzurrkette mit einer der Spanneinrichtungen nach den Fig. 1 bis 4,

Fig. 8 eine Ansicht in Richtung des Pfeiles VIII in Fig. 7,

Fig. 9 in schematischer Darstellung eine auf einer Ladefläche eines Kraftfahrzeuges, insbesondere eines LKW's, angeordnete Spanneinrichtung gem. Fig. 1.

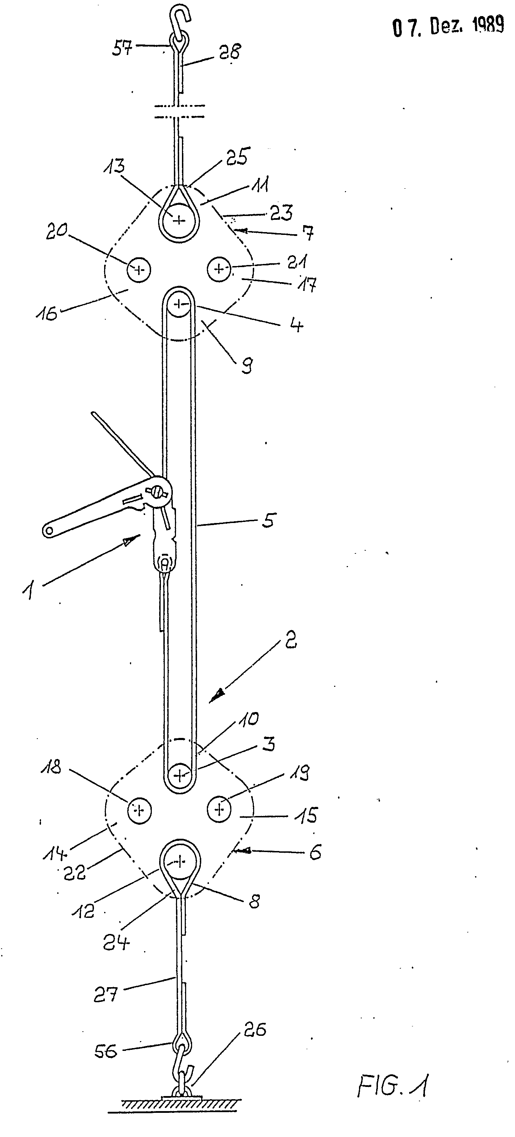

Die Spanneinrichtung nach Fig. 1 besteht im wesentlichen aus einem als Ratsche ausgebildeten Spannwerkzeug 1 und einer Kraftübertragungsvorrichtung 2.

Die Kraftübertragungsvorrichtung 2 ist ein Flaschenzug, der eine über Rollen 3, 4 umgelenktes und als Gurt 5 ausge bildetes Zugteil aufweist. In den Gurt ist die Ratsche 1 eingebaut. Die Rollen 3, 4 sind an jeweils einem Träger 6, 7 befestigt. Sie haben annähernd rautenförmigen Umriß mit abgerundeten Ecken. Vorzugsweise sind die Träger 6, 7 gleich ausgebildet. Die Rollen 3, 4 sind vorzugsweise in den einander zugewandten Eckbereichen 8, 9 der Träger gelagert. In dem gegenüberliegenden Eckbereich 10, 11 der Träger 6, 7 ist jeweils ein Lagerbolzen oder eine weitere Rolle 12, 13 angeordnet. Sie haben vorzugsweise größeren Durchmesser als die Rollen 3, 4. In den übrigen Eckbereichen 4, 5 und 16, 17 der Träger 6, 7 ist jeweils eine Rolle 18, 19 und 20, 21 gelagert. Sie haben etwa gleichen Durchmesser wie die Rollen 3, 4. Alle Rollen haben vom benachbarten Trägerrand 22, 23 etwa gleichen Abstand. Die im Durchmesser größeren Lagerbolzen 12, 13 dienen zum Anschließen der Gurtenden 24, 25 von Zurrpunkten 26, eingehängten und als Zurrgurte 27, 28 ausgebildeten Spannmitteln. Der Zurrpunkt, an dem der Gurt 28 befestigt ist, ist in Fig. 1 nicht dargestellt. Die Zurrpunkte 26 befinden sich beispielsweise auf

der Ladefläche L eines LKW's K, auf dem das Ladegut G mit den Zurrgurten 27, 28 verzurrt und mit der Spanneinrichtung 1, 2 auf der Ladefläche festgespannt wird (Fig. 9). Der verhältnismäßig kurze Gurt 27 bildet das Festende und das von der Spanneinrichtung 1, 2 abgewandte Ende des langen Gurtes 28 das Losende der Verzurreinrichtung.

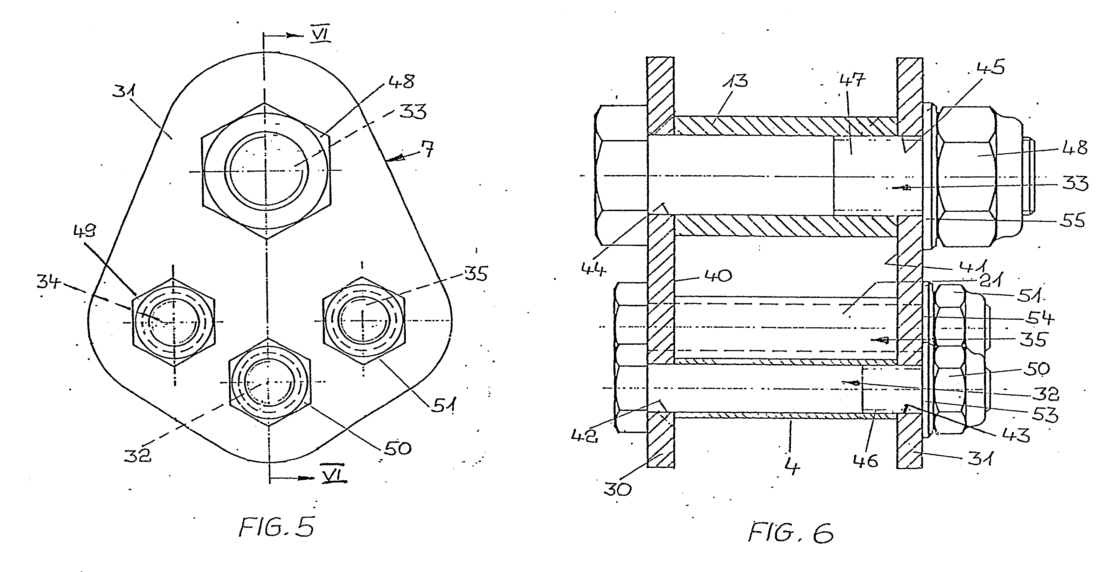

Wie die Fig. 5 und 6 zeigen, haben die Träger 6, 7, von denen in den Zeichnungen nur der Träger 7 dargestellt ist, zwei mit Abstand voneinander liegende Platten 30, 31, zwischen denen die Rollen 4, 13, 20, 21 auf Gewindebolzen 32 bis 35 gehalten sind. Die Rollen sind vorteilhaft durch Rohrstücke gebildet, deren Enden mit geringem Abstand den einander zugewandten Innenseiten 40, 41 der Platten 30, 31 gegenüberliegen.

Die Gewindebolzen 32 bis 35 ragen durch miteinander fluchtende Öffnungen 42 bis 45 der Platten. Auf den über die Platten nach außen ragenden Gewindeabschnitten 46, 47 der Gewindebolzen sind Sechskantmuttern 48 bis 51 geschraubt. Sie liegen unter Zwischenlage von Unterlegscheiben 53, 54, 55 an der Platte 31 an.

Vorzugsweise hat der Gurt 5 des Flaschenzuges die gleiche Breite wie die Rollen 3, 4, um die er gelegt ist, so daß er sich zwischen den Trägerplatten 30, 31 nicht hin- und herbewegen kann. Die einen Gurtenden 24, 25 sind schlaufenartig um die Rollen 12, 13 geschlungen, während die anderen schlaufenartigen Gurtenden 56, 57 mit einem Haken 58, 59 verbunden sind, der an den jeweiligen Zurrpunkten 26 der Kraftfahrzeugladefläche oder dgl. eingehängt wird.

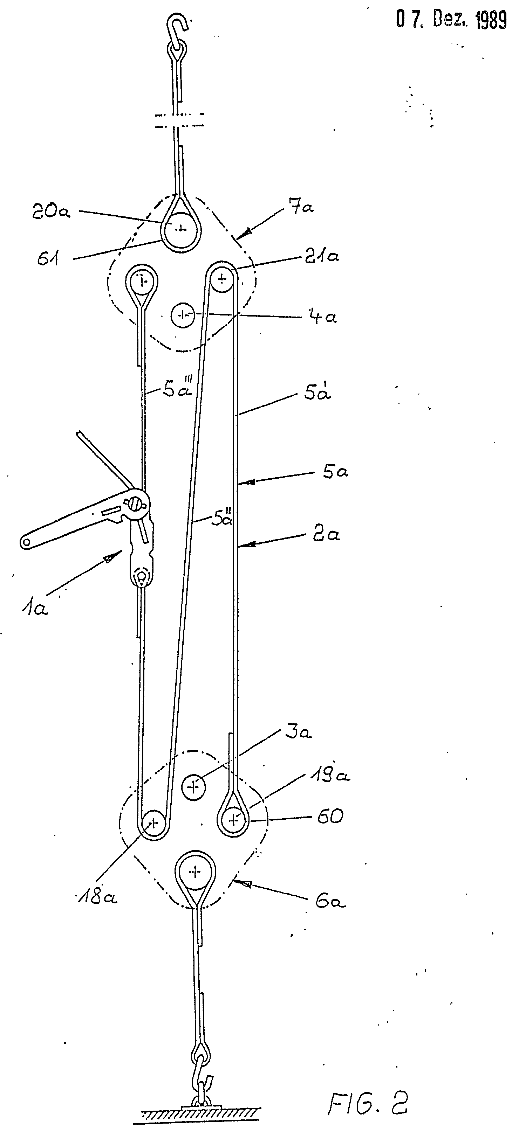

Die Ausführungsform nach Fig. 2 unterscheidet sich nur dadurch von der Ausführungsform nach Fig. 1, daß der Gurtflaschenzug 2a dreischnittig ausgebildet ist, während er bei der Ausführungsform nach Fig. 1 nur zweischnittig ausgebildet ist. Bei ihr ist der Gurt 5 um die Rollen 3 und 4 der beiden Träger 6 und 7 geführt und mit seinen Enden an der Ratsche 1 befestigt. Das eine Gurtende ist hierbei fest mit der Ratsche 1 verbunden, während das andere Gurtende in bekannter Weise beim Ratschvorgang auf die Ratschenwalze aufgewickelt wird. Dadurch werden die beiden Träger 6 und 7 gegeneinander bewegt und der Gurt 28 gespannt.

Bei der Spanneinrichtung 1a, 2a nach Fig. 2 ist der Gurt 5a des Flaschenzuges 2a mit schlaufenartigen Gurtenden 60, 61 an den Rollen 19a und 20a der Träger 6a und 7a befestigt. Der Gurt 5a ist von der Rolle 20a ausgehend nacheinander über die Rollen 18a und 21a geführt, an ihnen umgelenkt und zur Rolle 19a geführt. Dadurch werden drei mit Abstand zueinanderliegende Gurtabschnitte $5a'$, $5a''$, $5b'''$ gebildet. Im Gurtabschnitt $5a''$ ist die Ratsche 1a etwa in halber Länge angeordnet. Sie kann selbstverständlich auch im Gurtabschnitt $5a'$ angeordnet sein. Die Rollen 4a und 3a der Träger 6a und 7a sind so angeordnet, daß sie nicht mit den Gurtabschnitten $5a''$ und $5a'$ in Berührung kommen und diese nicht verschließen. Im übrigen ist diese Spanneinrichtung gleich ausgebildet wie die Spanneinrichtung nach Fig. 1.

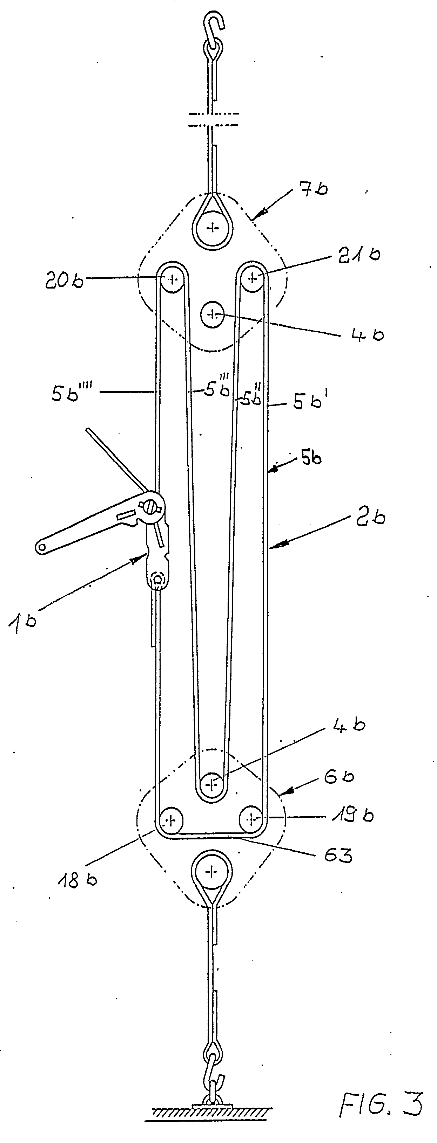

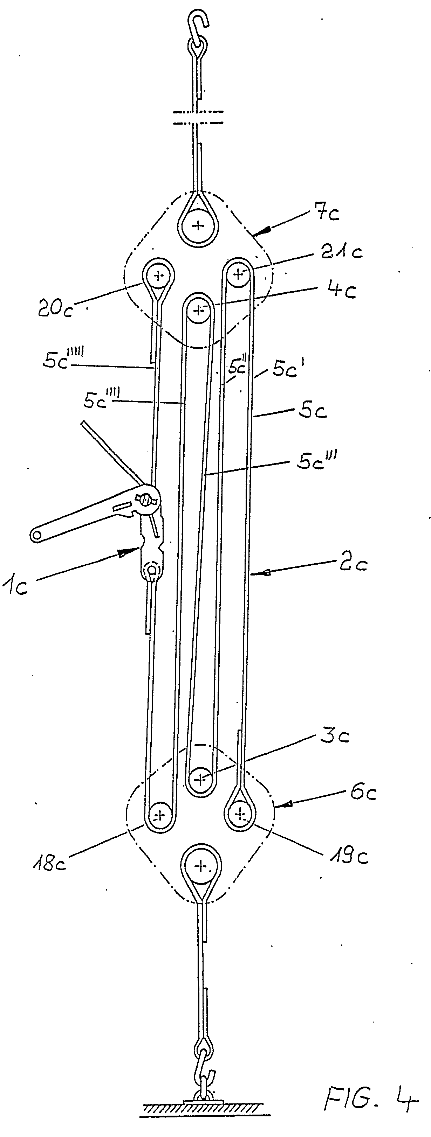

Auch die Spanneinrichtungen nach den Figuren 3 und 4 unterscheiden sich von den zuvor beschriebenen Spanneinrichtungen im wesentlichen nur durch die mehrschnittige Ausbildung des Flaschenzuges 2b bzw. 2c.

Bei der Ausführungsform nach Fig. 3 weist der Flaschenzug 2b vier nebeneinanderliegende Gurtabschnitte $5b'$ bis $5b''''$ auf. Der Gurt 2b ist mit seinen beiden Enden wie bei der Ausführungsform nach Fig. 1 an die Ratsche 1b angeschlossen. Von dem fest mit der Ratsche 1b verbundenen Ende aus ist der Gurt 2b zur Rolle 18b des Trägers 6b geführt und an ihr zur Rolle 19b des Trägers um etwa 90° umgelenkt. Zwischen den beiden Rollen 18b und 19b bildet der Gurt 2b einen Umlenkabschnitt 63. An der Rolle 19b wird der Gurt 2b um 90° zur Rolle 21b des Trägers 7b umgelenkt (Gurtabschnitt $5b'$). An ihr wird der Gurt 2b um etwa 180° zur Rolle 4b des Trägers 6b umgelenkt (Gurtabschnitt $5b''$), an der der Gurt wiederum um 180° umgelenkt und zur Rolle 20b des Trägers 7b geführt wird (Gurtabschnitt $5b'''$). An der Rolle 20b wird der Gurt 2b erneut um 180° umgelenkt und zur Ratsche 1b geführt (Gurtabschnitt $5b''''$). Dort wird das Gurtende dann an die Ratschenwalze in bekannter Weise angeschlossen. Die Rolle 4b des Trägers 7b liegt mit Abstand zwischen den beiden Gurtabschnitten $5b''$ und $5b'$.

Bei der Spannvorrichtung 2c nach Fig. 4 ist der Gurt 5c um alle Rollen 3c, 4c und 18c, 19c, 20c und 21c umgelenkt. Der auf diese Weise fünfschnittige Flaschenzug 2c weist somit fünf nebeneinanderliegende Gurtabschnitte $5c'$ bis $5c''''$ auf. Das eine, schlaufenartige Ende des Gurtes 5c ist an der Rolle 20c des Trägers 7c befestigt. Von dieser Rolle aus ist der Gurt 5c unter Bildung des Gurtabschnittes $5c''''$ zur Rolle 18c des Trägers 6c geführt. In diesem Gurtabschnitt $5c''''$ befindet sich die Ratsche 1c. An der Rolle 18c ist der Gurt 5c um 180° zur Rolle 4c des Trägers 7c umgelenkt (Gurtabschnitt $5c'''$), an der der Gurt um 180° umgelenkt und zur Rolle 3c des Trägers 6c geführt (Gurtabschnitt $5c''$). An ihr ist der Gurt 5c erneut um 180° umgelenkt und zur Rolle 21c des Trägers 7c geführt (Gurtabschnitt $5c''$), an der der Gurt zur Bildung des Gurtabschnittes $5c'$ um 180° umgelenkt ist. Das schlaufenartige Gurtende ist dann an der Rolle 19c des Trägers 6c befestigt.

Beim Flaschenzug 2 gemäß Fig. 1 kann die Vorspannkraft auf das Verzurrmittel 27, 28 auf z.B. 1 000 daN verdoppelt werden im Vergleich zu einem herkömmlichen Verzurrmittel ohne Flaschenzug. Beim dreischnittigen Flaschenzug gemäß Fig. 2 wird die maximal erreichbare Vorspannkraft sogar verdreifacht. Bei einem vier- und einem fünfschnittigen Flaschenzug (Fig. 3 und 4) wird die maximal erreichbare Vorspannkraft vervierfacht bzw. verfünffacht. Somit kann durch geeignete Wahl des Flaschenzuges die für den jeweiligen Einsatzfall notwendige Vorspannkraft erreicht werden.

Die Einfädelung des Zurrgurtes 5 in den Flaschenzug 2 hängt davon ab, ob die Ratsche 1 von der ergonomischen Seite mit Druck oder Zug folgen soll. Im ersten Fall muß der Ratschenhebel zum Spannen gedrückt werden, während er im anderen Fall zum Spannen gezogen wird. Für den Gurtflaschenzug kann beispielsweise ein Polyestergurt mit 50 mm Breite verwendet werden.

Da die Rollen 3, 4, 12, 13, 14, 18, 19, 20, 21 auf verschiedenen Achsen und teilweise nebeneinander und übereinander angeordnet sind, haben die Träger nur eine geringe axiale Breite, so daß sie in der Verzurrlage nur wenig auftragen.

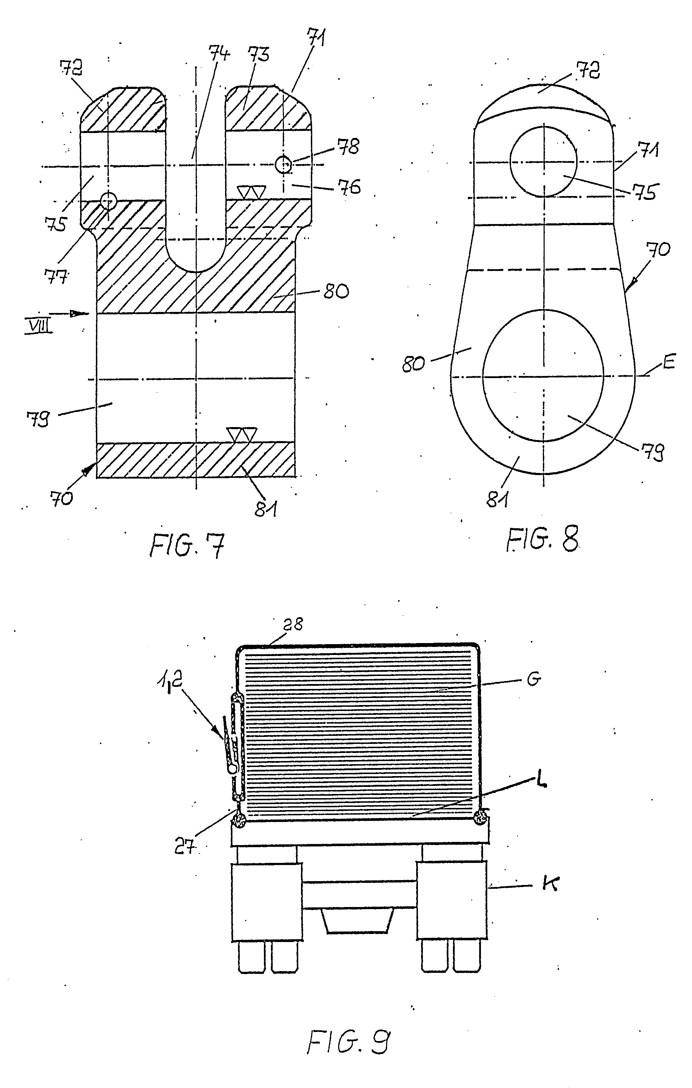

Anstelle des Verzurrgurtes 27 und/oder 28 kann auch eine Kette vorgesehen werden. Zum Anschluß der Kette an die Träger 6, 7 dient das Anschlußstück 70 gemäß den Fig. 7, 8. Es hat einen Gabelkopf 71 mit zwei zueinander parallelen Gabelschenkeln 72, 73, zwischen denen ein Schlitz 74 gebildet ist, der zur Aufnahme eines Kettengliedes der Kette dient.

Verrutscht beim Transport die Last bzw. das Gut, dann verringert sich bei Verwendung der Kette als Verzurrmittel die Spannung. Der Gurt 5 im Flaschenzug 2 kann jedoch die Vorspannkraft ausgleichen, weil die elastische Dehnung des Gurtes beim Spannen ein Nachspannen der Kette ermöglicht. Der Flaschenzug 1, 2 kann auf beiden Seiten des Verzurrmittels bzw. der zur verzurrenden Ladung vorgesehen sein. Beispielsweise wäre in diesem Fall bei der Ausführungsform nach Fig. 9 nicht nur auf der linken Fahrzeugseite, sondern zusätzlich auch auf der rechten Fahrzeugseite ein weiterer Flaschenzug vorgesehen.

Auch im Flaschenzug kann eine Kette eingesetzt werden. In diesem Fall sind auf den Gewindebolzen entsprechend ge staltete Rollen für die Kettenglieder vorgesehen. Auch die Ratsche ist dann zum Spannen der Kette entsprechend ausgebildet.

Anstelle des Flaschenzuges kann auch eine Getriebeeinrichtung und/oder eine Hydraulikeinrichtung als Kraftübersetzungsvorrichtung vorgesehen sein.

Zur Befestigung des Kettengliedes ist ein (nicht dargestellter) Bolzen vorhanden, der durch miteinander fluchtenden Öffnungen 75, 76 der teilkreisförmig nach außen abgerundeten Schenkel 72, 73 gesteckt ist und das jeweilige Kettenglied durchsetzt. Der Bolzen ist in den Öffnungen mit Sicherungsstiften gehalten, die durch im Durchmesser kleine Öffnungen 77, 78 ragen. Sie verlaufen senkrecht zu den Öffnungen 75, 76. Zum Verbinden des Anschlußstückes 70 mit den Trägern 6, 7 weist es eine zu den Öffnungen 75, 76 parallel verlaufende Öffnung 79 auf, die in einem Anschlußteil 80 vorgesehen ist, über den die Schenkel nach außen ragen. Dieser Anschlußteil verbreitert sich von den Schenkeln 72, 73 aus bis etwa in Höhe einer die Achse der Öffnung 79 enthaltenden Querebene E (Fig. 8). Das von den Schenkeln abgewandte Ende 81 des Anschlußteiles 80 ist halbkreisförmig gerundet. Zur Befestigung des Anschlußstückes 70 am Träger 6, 7 wird die Rolle 3 bzw. 4 mit den entsprechenden Gewindebolzen durch die Öffnung 79 gesteckt.

**Ansprüche**

1. Spanneinrichtung mit einem Spannwerkzeug, das mit einer als Flaschenzug ausgebildeten Kraftübersetzungsvorrichtung verbunden ist, deren Zugteil über Rollen umgelenkt ist, die drehbar an Trägern angeordnet sind, dadurch gekennzeichnet, daß die Träger (6, 7; 6a, 7a; 6b, 7b; 6c, 7c) jeweils mindestens zwei auf verschiedenen Achsen sitzende Rollen (3, 4, 16 bis 21; 18a bis 21a; 18b bis 21b; 3c, 4c, 18c bis 21c) haben, über die das Zugteil (5, 5a bis 5c) wahlweise führbar ist, und daß das Spannwerkzeug (1, 1a bis 1c) in einem zwischen den Trägern sich erstreckenden Zugteilabschnitt (5a''', 5b'''', 5c'''') angeordnet ist.

2. Spanneinrichtung nach Anspruch 1, dadurch gekennzeichnet, daß die Träger (6, 7; 6a, 7a; 6b, 7b; 6c, 7c) gleich ausgebildet sind und vorzugsweise viereckigen Umriß haben.

3. Spanneinrichtung nach Anspruch 1 oder 2, dadurch gekennzeichnet, daß die Rollen (3, 4, 18 bis 21; 18a bis 21a; 18b bis 21b; 3c, 4c, 18c bis 21c) in den Eckbereichen der Träger (6, 7; 6a, 7a; 6b, 7b; 6c, 7c) vorgesehen sind und daß in jedem Eckbereich der Träger (6, 7; 6a, 7a; 6b, 7b; 6c, 7c) vorzugsweise jeweils eine Rolle (3, 4, 18 bis 21; 18a bis 21a; 18b bis 21b; 3c, 4c, 18c bis 21c) vorgesehen ist.

4. Spanneinrichtung nach einem der Ansprüche 1 bis 3, dadurch gekennzeichnet, daß jeder Träger (6, 7; 6a, 7a; 6b, 7b; 6c, 7c) jeweils einen Anschluß (12, 13) für ein Verzurrmittel (27, 28) aufweist, der vorzugsweise durch eine Rolle gebildet ist.

5. Spanneinrichtung nach Anspruch 4, dadurch gekennzeichnet, daß die Rollen (12, 13) für das Verzurrmittel (27, 28) größeren Außendurchmesser haben als die Rollen (3, 4; 18 bis 21; 18a bis 21a; 18b bis 21b; 3c, 4c; 18c bis 21c) für das Zugteil (5, 5a bis 5c), die vorzugsweise gleich groß sind.

6. Spanneinrichtung nach Anspruch 4 oder 5, dadurch gekennzeichnet, daß die Anschlüsse (12, 13) für die Verzurrmittel (27, 28) an den voneinander abgewandten Enden der Kraftübertragungsvorrichtung (2; 2a; 2b; 2c) vorgesehen sind.

7. Spanneinrichtung nach einem der Ansprüche 1 bis 6, dadurch gekennzeichnet, daß die Rollen (3, 4, 12, 13, 18 bis 21; 18a bis 21a; 18b bis 21b; 3c, 4c, 18c bis 21c) durch Rohrstücke gebildet sind und vorzugsweise auf Halteteilen (32 bis 35), wie Gewindebolzen, sitzen, die mit Muttern (48 bis 51) am jeweiligen Träger (6, 7) gesichert sind.

8. Spanneinrichtung nach einem der Ansprüche 1 bis 7, dadurch gekennzeichnet, daß das Zugteil (5; 5a; 5b; 5c) ein Gurt ist.

9. Spanneinrichtung nach einem der Ansprüche 1 bis 7, dadurch gekennzeichnet, daß das Zugteil (5; 5a; 5b; 5c) eine Kette ist.

10. Spanneinrichtung nach einem der Ansprüche 1 bis 9, dadurch gekennzeichnet, daß das Spannwerkzeug (1; 1a bis 1c) eine Ratsche ist.

11. Spanneinrichtung nach einem der Ansprüche 1 bis 10, dadurch gekennzeichnet, daß die Träger (6, 7; 6a, 7a; 6b, 7b; 6c, 7c) jeweils zwei mit Abstand voneinander liegende Scheiben (30, 31) haben, zwischen denen die Rollen (3, 4, 18 bis 21; 18a bis 21a; 18b bis 21b; 3c, 4c, 18c bis 21c) und die Anschlüsse (12, 13) angeordnet sind.

P 2007.5 EP

0 7. Dez. 1989

FIG. 1

P 2007.5 EP

0 7. Dez. 1989

FIG. 2

P 2007.5 EP

0 7. Dez. 1989

FIG. 3

P 2007.5 EP

07. Dez. 1989

FIG. 4

EP 0 373 526 A2

P 2007.5 EP

0 7. Dez. 1989

FIG.5

FIG.6

0 7. Dez. 1989

FIG. 7

FIG. 8

FIG. 9